# FASCICULE DE BREVET EUROPEEN

(11) **EP 2 457 800 B1**
(45) Date de publication et mention de la délivrance du brevet: **17.05.2017**
(21) Numéro de dépôt: 11190038.7
(22) Date de dépôt: 22.11.2011
(51) Int. Cl.: G01M 17/013, B61K 9/08, G01M 17/10, G01L 5/16

(54) **Roue de mesure de force pour un véhicule ferroviaire, dispositif de mesure et procédé de fabrication de la roue**
Kraftmessungsrad für ein Schienenfahrzeug, Messvorrichtung und Herstellungsverfahren dieses Rads
Force-measuring wheel for a railway vehicle, measurement device and method for manufacturing the wheel

(30) Priorité: 26.11.2010 FR 1059771
(43) Date de publication de la demande: 30.05.2012
(73) Titulaire: SNCF Mobilités, 93200 Saint-Denis (FR)
(72) Inventeur: Baudoin, Philippe, 75012 Paris (FR); Vuillaume, Philippe, 91860 Epinay sous Senart (FR)
(74) Mandataire: Argyma

(56) Documents cités:
- WO-A1-00/20831
- WO-A1-2006/128878
- US-A- 5 492 002

## Description

L'invention concerne le domaine ferroviaire et plus particulièrement la mesure des forces de contact entre les roues d'un véhicule ferroviaire et les rails de la voie de chemin de fer sur lesquels circule le véhicule.

Un véhicule ferroviaire, tel qu'un train à grande vitesse TGV, comprend de manière classique une pluralité de voitures comportant des essieux sur lesquels sont montées des roues, les roues entrant en contact avec les rails. Par nature, une roue comporte un moyeu central, une partie annulaire intérieure entourant le moyeu, désignée « toile de la roue », et une partie annulaire extérieure entourant la toile, désignée « bandage de la roue » destinée à venir en contact avec le rail. Pour une roue monobloc, la partie annulaire extérieure est classiquement désignée jante-bandage.

Afin d'optimiser le déplacement du véhicule ferroviaire sur les rails, il est primordial de connaître les forces de contact entre une roue et le rail. Parmi les forces de contact, on différencie les forces verticales, transversales et longitudinales.

De manière classique, le rail s'étendant longitudinalement selon un axe longitudinal X, une roue est en appui vertical sur le rail selon un axe vertical Z qui est orthogonal à l'axe X. La direction transversale est définie selon un axe Y orthogonal aux axes X, Z de manière à former un repère orthogonal (X, Y, Z). Par la suite, les forces de contact verticales Fz, transversales Fy et longitudinales Fx sont référencées dans le référentiel orthogonal (X, Y, Z).

La présente invention vise à mesurer de manière précise les forces de contact longitudinales Fx entre la roue et le rail, en particulier lors des phases de freinage et de traction du véhicule ferroviaire.

On connaît par la demande FR 2 368 701 A1 une roue pour véhicule ferroviaire comportant des orifices ménagés dans le bandage de la roue dans lesquels sont disposées des jauges de contrainte de manière à mesurer les forces verticales Fz tout en déterminant le point de contact entre la roue et le rail. Cette roue de mesure ne permet pas de mesurer la force longitudinale Fx et comprend de nombreux évidements qui viennent fragiliser la roue de mesure.

De plus, on connaît la demande WO 00/20831 A1 (qui correspond au préambule de la revendication 1.) qui enseigne une roue de mesure comportant une toile dans laquelle sont formés huit orifices. Un capteur de déformation est monté dans chacun des huit orifices, les capteurs de deux orifices diamétralement opposés étant couplés de manière à s'affranchir de la dérive en température. Cette roue de mesure ne permet pas de mesurer la force longitudinale Fx ce qui présente un inconvénient.

Enfin, on connaît la demande DE 103 46 537 A1 qui enseigne une roue de mesure particulièrement complexe comportant, entre son bandage et sa toile, une couche de caoutchouc intermédiaire. Des capteurs de déformation sont disposés sur la face interne du bandage, entre le bandage et la couche de caoutchouc, pour mesurer de manière simple la force longitudinale Fx. Cette méthode de mesure de la force longitudinale Fx n'est applicable que pour une roue de mesure spécifique qui comporte une interface jante-bandage spécifique. En effet, une roue monobloc pour laquelle la jante est solidaire de son bandage n'est pas adaptée pour réaliser une telle mesure, les capteurs de déformation ne pouvant pas être positionnés. Il en va de même pour une roue standard qui comporte un bandage ne permettant pas le positionnement d'une couche de caoutchouc intermédiaire. Par ailleurs, DE 103 46 537 A1 enseigne également de placer des capteurs de déformation sur la toile, entre des orifices de la toile de la roue, afin de mesurer les forces de contact verticales Fz et transversales Fy. Les orifices possèdent un diamètre important par rapport au diamètre de la roue de mesure ce qui fragilise la structure de cette dernière.

Aucun des documents de l'art antérieur ne divulgue une roue pour véhicule ferroviaire de conception standard apte à mesurer de manière précise les forces longitudinales.

Pour éliminer au moins certains de ces inconvénients, l'invention concerne une roue pour un véhicule ferroviaire, la roue comportant une toile dans laquelle est formé au moins un orifice, au moins un capteur de déformation étant monté dans l'orifice de manière à mesurer les déformations de la roue en fonctionnement, le capteur de déformation étant orienté obliquement dans ledit orifice par rapport à une droite radiale passant entre le centre de roue et le centre d'orifice de manière à favoriser la détection d'une déformation longitudinale de la roue en fonctionnement.

Grâce à l'invention, le capteur est orienté dans l'orifice pour avoir une sensibilité maximale aux efforts longitudinaux, ces efforts étant amplifiés sur la toile de la roue par la présence de l'orifice. Ainsi, en connaissant les zones de contraintes à la périphérie de l'orifice, on en déduit l'orientation adéquate du capteur dans l'orifice. On peut alors mesurer de manière précise et reproductible les efforts longitudinaux appliqués sur la roue ce qui permet de mieux analyser les efforts de freinage et de traction du véhicule ferroviaire.

De préférence, l'orifice comportant au moins une zone de contraintes sensible aux déformations longitudinales, le capteur est orienté selon ladite zone.

Pour mesurer une force longitudinale appliquée à une roue, l'homme du métier est conduit de manière intuitive à placer des jauges de contraintes parallèlement au support de cette force, c'est-à-dire, tangentiellement à la roue. Selon l'invention, un capteur de déformation est orienté de manière oblique pour mesurer simultanément la force longitudinale et la force verticale avec un même capteur de déformation.

Selon un aspect de l'invention, la roue comportant un centre de roue, au moins deux orifices étant formés dans la toile de la roue à une même distance radiale du centre de roue, les orifices sont formés à proximité l'un de l'autre pour former une paire d'orifices de manière à augmenter leur sensibilité à la déformation longitudinale. En formant des paires d'orifices, on augmente de manière importante la sensibilité de zones de la périphérie des orifices, la précision des mesures de forces longitudinales étant alors améliorée.

On désigne par « paire d'orifices » deux orifices séparés d'une distance inférieure ou égale à la plus grande dimension des orifices.

De manière préférée, le capteur de déformation est orienté obliquement d'un angle d'inclinaison α par rapport à une droite Δ s'étendant radialement depuis le centre de roue et passant entre les deux orifices de la toile de la roue, à égale distance desdits deux orifices. De manière avantageuse, le capteur de déformation est plus sensible aux forces longitudinales qu'aux autres forces, la formation d'une paire d'orifices amplifiant la déformation longitudinale.

De préférence, l'angle d'inclinaison α est compris entre 30° et 60°, de préférence égal à 45° de manière à optimiser l'orientation du capteur en fonction des zones les plus sensibles aux déformations longitudinales.

Selon un autre aspect de l'invention, des moyens de mesure auxiliaires, indépendants dudit capteur de déformation, sont montés dans ledit orifice, lesdits moyens étant orientés dans ledit orifice de manière à favoriser la détection d'une déformation verticale de la roue en fonctionnement. Grâce à la mesure des efforts verticaux, on peut connaître leur influence sur la mesure des efforts longitudinaux et en déduire une mesure optimisée desdits efforts longitudinaux.

De manière préférée, le capteur de déformation est monté dans une partie radialement extérieure de l'orifice qui est plus sensible aux déformations longitudinales.

Selon un aspect de l'invention, au moins quatre orifices étant formés dans la toile de la roue à une même distance radiale du centre de roue, au moins un capteur de déformation étant monté dans chacun desdits orifices, les capteurs de déformation sont reliés entre eux pour former un pont de Wheastone de manière à mesurer les déformations longitudinales de la roue en fonctionnement. Un pont de Wheastone permet d'obtenir une mesure fiable et précise des déformations sur une surface ce qui est très avantageux. En outre, un tel pont permet de s'affranchir des forces centrifuges susceptibles de venir perturber la mesure des forces longitudinales.

De préférence, les quatre orifices définissant une première paire d'orifices et une deuxième paire d'orifices, les orifices d'une même paire étant formés à proximité l'un de l'autre, la première paire d'orifices et la deuxième paire d'orifices sont diamétralement opposés sur la roue.

L'invention concerne en outre un dispositif de mesure de forces de contact d'une roue d'un véhicule ferroviaire sur un rail, le dispositif comportant une roue telle que présentée précédemment et un calculateur relié à ladite roue et agencé pour calculer les forces longitudinales de contact en fonction de la déformation mesurée par ledit capteur de déformation. Grâce au dispositif, on obtient de manière simple et directe la valeur de la force longitudinale.

De préférence, le dispositif comporte des moyens de détection de la position dudit orifice par rapport à la zone de contact roue/rail. Selon une forme de réalisation préférée, les moyens de détection sont configurés pour mesurer la position angulaire dudit orifice par rapport à la zone de contact roue/rail.

De préférence encore, le calculateur est configuré pour calculer la force longitudinale de contact en fonction de la position dudit orifice par rapport à la zone de contact roue/rail. Ainsi, de manière avantageuse, on peut calculer la valeur de la force longitudinale de manière précise, ledit orifice étant plus sensible aux forces longitudinales de contact lorsqu'il est situé à proximité de la zone de contact roue/rail.

De préférence, le dispositif comporte des moyens de mesure de la vitesse de rotation de la roue reliés audit calculateur de manière à déterminer les efforts dynamiques de la roue en fonction de la vitesse du véhicule ferroviaire.

L'invention concerne également un procédé de fabrication d'une roue selon la revendication 13. De préférence, au moins une zone de contraintes sensible aux déformations longitudinales étant définie dans ledit orifice, on oriente le capteur de déformation de manière à ce qu'il s'étende le long de la dite zone de contraintes.

De préférence, au cours du procédé :
- on usine au moins une première paire d'orifices dans la toile de la roue ;
- on usine au moins une deuxième paire d'orifices dans la toile de la roue diamétralement opposée à la première paire ;
- on place au moins un capteur de déformation dans chaque orifice;
- on oriente chaque capteur de déformation dans son orifice de manière à favoriser la détection d'une déformation longitudinale de la roue en fonctionnement ; et
- on relie les capteurs de déformation de manière à former un pont de Wheastone.

L'invention sera mieux comprise à l'aide des dessins annexés sur lesquels :
- la figure 1 est une représentation schématique d'une roue de mesure de force pour un véhicule ferroviaire selon l'invention, la roue étant représentée en vue de face ;
- la figure 2 est une vue en coupe de la roue de la figure 1 selon un axe de coupe B-B ;
- la figure 3 est une vue rapprochée d'une paire d'orifices de la roue de la figure 1, les zones de contraintes sensibles aux efforts verticaux (Zv) et les zones de contraintes sensibles aux efforts longitudinaux (Zx) étant représentées ;
- la figure 4 est une représentation schématique de la roue de mesure de la figure 1 dans laquelle quatre capteurs de déformation ont été montés dans des orifices de la roue ;
- la figure 5 est une représentation schématique d'un pont de Wheastone formé à partir des capteurs de déformation de la roue de la figure 4 ; et
- la figure 6 est un graphique représentant la sensibilité aux déformations verticale (courbe Cv), transversale (courbe Cy) et longitudinale (courbe Cx) du pont de Wheastone de la figure 5.

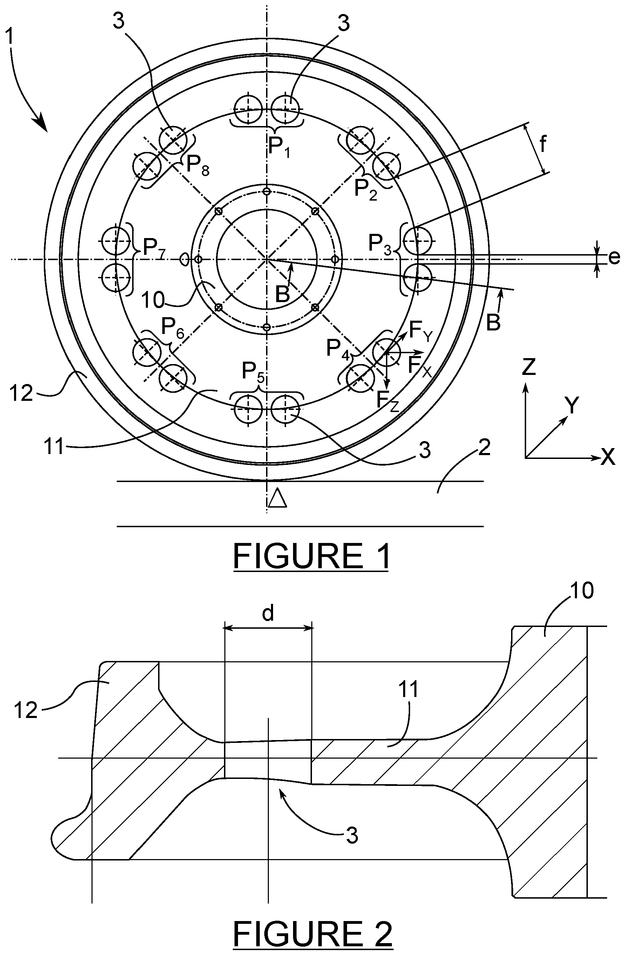

Une roue 1 de mesure de force pour un véhicule ferroviaire est représentée schématiquement sur la figure 1. La roue circulaire 1 comprend principalement de l'acier et comporte un moyeu central 10 destiné à se relier à un essieu de véhicule ferroviaire, un bandage de roue 12 se présentant sous la forme d'une couronne annulaire extérieure et une toile de roue 11 se présentant sous la forme d'une couronne annulaire intérieure située entre le moyeu 10 et le bandage 12. La roue 1 est monobloc, la toile de roue 11 étant solidaire du bandage 12 pour former un ensemble structural.

De manière classique, le bandage 12 de la roue 1 est destiné à entrer en contact avec un rail 2 représenté sur la figure 1. Le rail 2 s'étend selon une direction longitudinale X, la roue 1 s'appuyant verticalement sur le rail 2 selon une direction verticale Z. Par la suite, les forces de contact verticales Fz, transversales Fy et longitudinales Fx entre la roue 1 et le rail 2 sont référencées dans le référentiel orthogonal (X, Y, Z) de la figure 1.

Dans cet exemple, la roue 1 possède un diamètre extérieur de l'ordre de 890 mm et est percée dans sa toile 11 d'une pluralité d'orifices 3. La roue 1 comporte un centre de roue (non référencé), la direction radiale étant définie par rapport au centre de roue. Comme représenté sur la figure 2, chaque orifice 3 est traversant dans la toile 11 de la roue 1 et est formé sur un diamètre intérieur de l'ordre de 650 mm de la roue 1, le diamètre de chacun des orifices 3 étant de l'ordre de 60 mm (dimension référencée « d » sur la figure 2).

L'invention a été ici présentée pour des orifices circulaires mais il va de soi que l'invention s'applique également pour des orifices de forme ovale ou elliptique, la plus grande dimension de l'orifice étant orientée de préférence selon une direction tangentielle, c'est-à-dire, selon une direction orthogonale à une droite radiale passant par le centre de l'orifice 3.

Un orifice 3 comporte à sa périphérie des zones de contraintes dont la sensibilité aux déformations varie selon le type de déformations. En effet, les forces de déformations sont amplifiées par la présence d'un orifice 3 dans la toile 11 de la roue 1, certaines zones de la périphérie de l'orifice 3 amplifiant plus certains types de déformations que d'autres.

En particulier, pour un unique orifice 3, la zone de contraintes radialement intérieure et la zone de contraintes radialement extérieure sont particulièrement sensibles aux déformations longitudinales tandis que les zones de contraintes latérales, situées entre les zones de contraintes radialement intérieure et extérieure, sont sensibles aux déformations verticales.

Selon l'invention, on place un capteur de déformation, dans cet exemple une jauge de contrainte connue de l'homme du métier, dans ledit orifice 3 en l'orientant selon la zone radialement intérieure ou la zone radialement extérieure qui sont celles de plus grande sensibilité. De préférence, la jauge de contrainte est placée sur la portion radialement extérieure dont la sensibilité est la plus importante.

De manière préférée, pour une roue 1 comportant une pluralité d'orifices 3, on regroupe les orifices 3 de la toile de la roue 1 par paire P1-P8 comme représenté sur la figure 1 de manière à amplifier la sensibilité des orifices 3 aux déformations longitudinales. Par comparaison à un unique orifice, une paire d'orifices 3 augmente de manière importante la sensibilité aux efforts longitudinaux pour une section d'orifice équivalente.

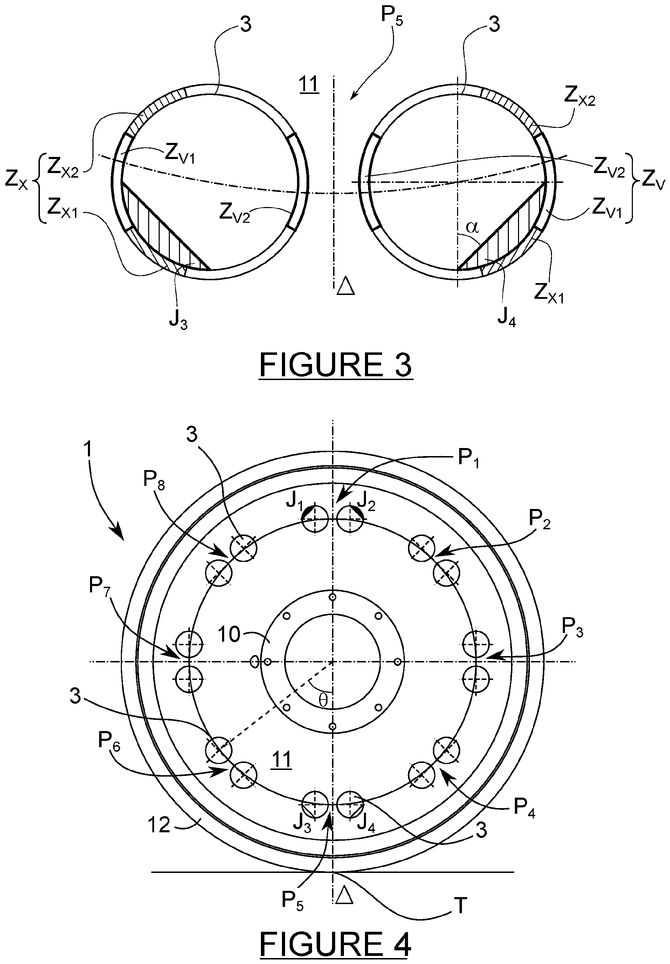

Deux orifices 3 forment une paire lorsque la distance les séparant, référencée distance « e » sur la figure 4, est plus faible que la distance séparant un orifice de la paire d'un autre orifice n'appartenant pas à ladite paire, référencée distance « f » sur la figure 4. De préférence, la distance « e » séparant deux orifices d'une même paire est inférieure ou égale à la plus grande dimension des orifices. Par opposition, la distance « f » entre deux orifices n'appartenant pas à une même paire est strictement supérieure à la plus grande dimension des orifices.

Dans cet exemple, les orifices 3 (diamètre 60 mm) d'une paire P1-P8 sont distants d'une distance « e » de l'ordre de 20 mm, les paires P1-P8 étant décalées angulairement de 45° les unes par rapport aux autres de manière à ce que la distance « f » entre les trous les plus proches entre deux paires P1-P8 soit de l'ordre de 115 mm.

Afin d'améliorer la compréhension de l'invention, la paire d'orifices P5 est représentée schématiquement sur la figure 3 ainsi qu'une droite delta Δ s'étendant radialement depuis le centre de roue 1 et passant entre les deux orifices 3 de la paire P5, à égale distance desdits deux orifices 3.

Du fait de la proximité des orifices 3 dans une même paire P5, les zones de contraintes de la périphérie des orifices 3, qui sont sensibles aux déformations longitudinales, sont modifiées par comparaison à un orifice isolé. Par la suite, les termes « radial extérieur » et « radial intérieur » sont définis par rapport à la direction radiale de la roue 1. De manière similaire, les termes « latéral extérieur » et « latéral intérieur » sont définis par rapport à la droite Δ, la partie latérale intérieure d'un orifice 3 étant la plus proche de la droite Δ, la partie latérale extérieure d'un orifice 3 étant la plus éloignée de la droite Δ.

En référence à la figure 3, les portions blanches de la périphérie de l'orifice 3 correspondent aux zones de contraintes longitudinales Zx tandis que les portions hachurées correspondent aux zones de contraintes verticales Zv des orifices 3.

Les zones de contraintes longitudinales Zx sont situées sur une première portion latérale extérieure et radiale extérieure Zx1 et sur une deuxième portion latérale extérieure et radiale intérieure Zx2. Les zones de contraintes verticale Zv sont situées sur une première portion latérale extérieure Zv1 et sur une deuxième portion latérale intérieure Zv2. Autrement dit, les zones de contraintes sont symétriques par rapport à la droite Δ comme représenté sur la figure 3.

Le groupement par paires des orifices 3 permet d'augmenter fortement la sensibilité aux efforts longitudinaux dans les zones de contraintes Zx. Afin de tirer partie de cette caractéristique, on place les jauges de contrainte dans les orifices 3 en les orientant en fonction de la position des zones de contraintes longitudinales Zx.

A titre d'exemple, en référence aux figures 3 et 4, des jauges de contraintes J1-J4 sont orientées selon les zones de contraintes longitudinales Zx1, c'est-à-dire, sur la portion latérale extérieure et radiale extérieure de la périphérie des orifices 3. De préférence, chaque jauge de contrainte J1-J4 s'étend sensiblement longitudinalement et forme un angle α avec la droite Δ qui est de l'ordre de 45°, ledit angle α étant ouvert vers le centre de la roue 1 comme représenté sur la figure 3. Les jauges de contrainte J3-J4 d'une paire P5 sont orientées de manière symétrique par rapport à la droite Δ comme représenté sur la figure 3.

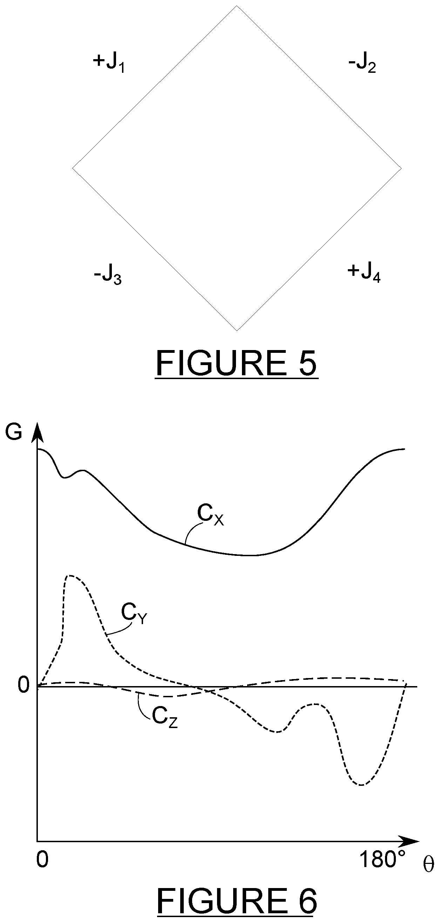

Selon une forme préférée de l'invention, en référence aux figures 4 et 5, les jauges de contrainte J1-J4 des deux paires d'orifices P1-P5, diamétralement opposées sur la roue 1, sont reliées pour former un pont de Wheastone, également appelé « PONT X » et connu en soi de l'homme du métier. Un tel pont est configuré pour mesurer les déformations sur une surface de la roue 1 au cours de son fonctionnement. Un tel pont présente l'avantage de diminuer l'impact des forces centrifuges sur les mesures. En outre, comme les jauges de contrainte J1 à J4 sont diamétralement opposées, le pont de Wheastone fournit une mesure globale des déformations sur la toile 11 de la roue 1. Comme représenté sur la figure 5, les jauges J1 à J4 sont reliées de manière à compenser les forces centrifuges ainsi que les écarts de température. Les signes des jauges sur la figure 5 indiquent si le déséquilibre du pont est positif ou négatif, ce type d'indication étant connu de l'homme du métier.

Selon la forme de réalisation préférée de l'invention, la roue 1 comporte huit paires d'orifices P1-P8 réparties angulairement sur la toile 11 de la roue 1 et espacées de 45° les uns par rapport aux autres de manière à former quatre ponts de Wheastone par couplage des paires P1-P5, P2-P6, P3-P7 et P4-P8. On obtient ainsi une mesure précise des forces longitudinales Fx quel que soit le point de contact entre la roue 1 et le rail 2.

Comme représenté sur le graphique de la figure 6 représentant en abscisse l'angle θ de rotation de la roue 1 et en ordonnée une mesure G de déformation, la roue 1 selon l'invention est plus sensible aux forces longitudinales Fx (courbe Cx), qu'aux forces transversales Fy (courbe Cy) ou verticales Fz (courbe Cz) au cours de la rotation de la roue 1 sur un demi-tour (rotation de la roue de 0° à 180°). On peut ainsi mesurer de manière précise les forces longitudinales Fx sans être « pollué » par les autres forces Fy et Fz.

De manière préférée, des moyens de mesure auxiliaires, indépendants desdits capteurs de déformation J1-J4, sont montés dans ledit ou lesdits orifices 3, lesdits moyens étant orientés dans ledit orifice 3 de manière à favoriser la détection d'une déformation verticale de la roue 1 en fonctionnement. Ainsi en mesurant de manière précise la valeur des forces verticales Fz, on peut en déduire une valeur optimisée des forces longitudinales Fx. Les moyens de mesure auxiliaires se présentent de préférence sous la forme de capteurs de déformation tels que des jauges de contraintes.

Selon un aspect de l'invention, la roue 1 appartient à un dispositif de mesure qui est de préférence embarqué sur le véhicule ferroviaire.

Ce dispositif de mesure de forces de contact d'une roue 1 d'un véhicule ferroviaire sur un rail 2 comporte une roue 1 telle que présentée précédemment et un calculateur relié à au moins un capteur de déformation de la roue 1 de manière à calculer les forces appliquées à la roue 1, en particulier, les forces longitudinales Fx à partir de la mesure du capteur de déformation.

De manière préférée, le dispositif de mesure comporte en outre des moyens de détection de la position de la zone de la roue 1 en contact avec le rail 2, les moyens de détection étant reliés au calculateur. On peut ainsi en déduire quelle paire d'orifices 3 est à proximité de la zone de contact et est donc la plus sensible aux forces longitudinales. Le calculateur peut ainsi avantageusement calculer une valeur optimisée des forces longitudinales.

Pour une roue 1 comportant un orifice isolé 3, c'est-à-dire n'appartenant pas à une paire, cela permet avantageusement d'obtenir de manière ponctuelle une mesure de la force longitudinale de contact lorsque ledit orifice 3 est dans la zone de contact roue/rail. De manière préférée, les moyens de détection de la position de la zone de la roue en contact avec le rail se présentent sous la forme d'un codeur angulaire mais il va de soi que d'autres moyens pourraient convenir. A titre d'exemple, en référence à la figure 4, le codeur angulaire mesure un angle θ entre la droite passant par l'orifice 3 de la paire P6 et une droite verticale servant de référence. La lecture de l'angle θ permet ainsi de déterminer qu'elle est la paire la plus proche du point T de contact roue/rail. A titre d'exemple, lorsque θ est égal à 180°, la paire P2 est au point de contact roue/rail. La position angulaire de chaque orifice 3 est ainsi définie de manière précise par rapport à l'angle θ.

Selon un autre aspect de l'invention, le dispositif comporte des moyens de mesure de la vitesse de rotation de la roue 1, reliés audit calculateur. Le calculateur peut ainsi avantageusement mettre en relation les performances dynamiques de la roue 1 avec la vitesse de circulation du véhicule. On peut ainsi en déduire la plage de vitesse du véhicule qui est la plus sensible aux forces longitudinales Fx.

Grâce à la roue 1 et au dispositif de mesure de l'invention, on mesure de manière précise et reproductible les forces longitudinales qui s'exercent lors du freinage ou lors de la traction d'un véhicule ferroviaire.

De manière très avantageuse, il n'est pas nécessaire de recourir à des roues spécifiques pour mesurer des forces longitudinales Fx comme proposé dans l'art antérieur, une roue standard pouvant être usinée et équipée d'un capteur de déformation judicieusement orienté afin d'être utilisée comme une roue de mesure.

## Revendications

1. Roue (1) pour un véhicule ferroviaire, la roue (1) comportant un centre de roue et une toile (11) dans laquelle est formé au moins un orifice (3) comportant un centre d'orifice, au moins un capteur de déformation (J1-J4) étant monté dans l'orifice (3) de manière à mesurer les déformations de la roue (1) en fonctionnement, roue **caractérisée par le fait que** le capteur de déformation (J1-J4) est orienté obliquement dans ledit orifice (3) par rapport à une droite radiale passant entre le centre de roue et le centre d'orifice de manière à favoriser la détection d'une déformation longitudinale de la roue (1) en fonctionnement.

2. Roue selon la revendication précédente, dans laquelle, la roue (1) comportant un centre de roue, au moins deux orifices (3) étant formés dans la toile (11) de la roue (1) à une même distance radiale du centre de roue, les orifices (3) sont formés à proximité l'un de l'autre pour former une paire d'orifices (P1 ; P5) de manière à augmenter leur sensibilité à la déformation longitudinale.

3. Roue selon la revendication précédente, dans laquelle, le capteur de déformation (J1-J4) est orienté obliquement d'un angle d'inclinaison α par rapport à une droite Δ s'étendant radialement depuis le centre de roue (1) et passant entre les deux orifices (3) de la toile (11) de la roue (1), à égale distance desdits deux orifices (3).

4. Roue selon la revendication précédente, dans laquelle l'angle d'inclinaison α est compris entre 30° et 60°, de préférence égal à 45°.

5. Roue selon l'une des revendications précédentes, dans laquelle des moyens de mesure auxiliaires, indépendants dudit capteur de déformation (J1-J4), sont montés dans ledit orifice (3), lesdits moyens étant orientés dans ledit orifice (3) de manière à favoriser la détection d'une déformation verticale de la roue (1) en fonctionnement.

6. Roue selon l'une des revendications précédentes, dans laquelle le capteur de déformation (J1-J4) est monté dans une partie radialement extérieure de l'orifice (3).

7. Roue selon l'une des revendications précédentes, dans laquelle, au moins quatre orifices (3) étant formés dans la toile (11) de la roue (1) à une même distance radiale du centre de roue, au moins un capteur de déformation (J1-J4) étant monté dans chacun desdits orifices (3), les capteurs de déformation (J1-J4) sont reliés entre eux pour former un pont de Wheastone de manière à mesurer les déformations de la roue (1) en fonctionnement.

8. Roue selon la revendication précédente, dans laquelle, les quatre orifices (3) définissant une première paire d'orifices (P1) et une deuxième paire d'orifices (P5), les orifices (3) d'une même paire (P1;P5) étant formés à proximité l'un de l'autre, la première paire d'orifices (P1) et la deuxième paire d'orifices (P5) sont diamétralement opposés sur la roue (1).

9. Dispositif de mesure de forces de contact d'une roue d'un véhicule ferroviaire sur un rail, le dispositif comportant une roue selon l'une des revendications 1 à 8 et un calculateur relié à ladite roue (1) et configuré pour calculer la force longitudinale de contact en fonction de la déformation mesurée par ledit capteur de déformation (J1-J4).

10. Dispositif selon la revendication précédente, dans lequel le dispositif comporte des moyens de détection de la position dudit orifice (3) par rapport à la zone de contact roue/rail.

11. Dispositif selon la revendication précédente, dans lequel le calculateur est configuré pour calculer la force longitudinale de contact en fonction de la position dudit orifice (3) par rapport à la zone de contact roue/rail.

12. Dispositif selon l'une des revendications 9 à 11, dans lequel le dispositif comporte des moyens de mesure de la vitesse de rotation de la roue (1) reliés audit calculateur.

13. Procédé de fabrication d'une roue selon l'une des revendications 1 à 8 à partir d'une roue comportant une toile et un centre de roue, procédé dans lequel :
a. on usine au moins un orifice (3) dans la toile (11) de la roue (1), l'orifice (3) comportant un centre d'orifice ;
b. on place au moins un capteur de déformation (J1-J4) dans ledit orifice (3); et
c. on oriente le capteur de déformation (J1-J4) obliquement dans ledit orifice (3) par rapport à une droite radiale passant entre le centre de roue et le centre d'orifice de manière à favoriser la détection d'une déformation longitudinale de la roue (1) en fonctionnement.

14. Procédé selon la revendication 13, dans lequel :
a. on usine au moins une première paire (P1) d'orifices (3) dans la toile (11) de la roue (1) ;
b. on usine au moins une deuxième paire (P5) d'orifices (3) dans la toile (11) de la roue (1) diamétralement opposée à la première paire (P1) ;
c. on place au moins capteur de déformation (J1-J4) dans chaque orifice (3) ;
d. on oriente chaque capteur de déformation (J1-J4) obliquement dans son orifice (3) par rapport à une droite radiale passant entre le centre de roue et le centre de son orifice de manière à favoriser la détection d'une déformation longitudinale de la roue (1) en fonctionnement ; et
e. on relie les capteurs de déformation (J1-J4) de manière à former un pont de Wheastone.

## Patentansprüche

1. Rad (1) für ein Schienenfahrzeug, wobei das Rad (1) ein Radzentrum und mindestens eine Scheibe (11) umfasst, in der mindestens eine Öffnung (3) ausgebildet ist, die ein Öffnungszentrum umfasst, wobei mindestens ein Deformationssensor (J1-J4) in der Öffnung (3) angebracht ist, um die Deformationen des Rades (1) im Betrieb zu messen, wobei das Rad **dadurch gekennzeichnet ist, dass** der Deformationssensor (J1-J4) schräg in der Öffnung (3) mit Bezug auf eine radiale Gerade ausgerichtet ist, die zwischen dem Radzentrum und dem Öffnungszentrum verläuft, um die Erfassung einer longitudinalen Deformation des Rades (1) im Betrieb zu fördern.

2. Rad nach dem vorhergehenden Anspruch, wobei das Rad (1) ein Radzentrum aufweist, wobei mindestens zwei Öffnungen (3) in der Scheibe (11) des Rades (1) in einem gleichen radialen Abstand von dem Radzentrum ausgebildet sind, wobei die Öffnungen (3) in der Nähe zueinander ausgebildet sind, um ein Paar von Öffnungen (P1; P5) zu bilden, um ihre Empfindlichkeit gegenüber der axialen Deformation zu erhöhen.

3. Rad nach dem vorhergehenden Anspruch, wobei der Deformationssensor (J1-J4) um einem Neigungswinkel α relativ zu einer geraden Linie Δ schräg ausgerichtet ist, die sich radial von dem Radzentrum (1) erstreckt und zwischen den beiden Öffnungen (3) der Scheibe (11) des Rades (1) im gleichen Abstand von den beiden Öffnungen (3) verläuft.

4. Rad nach dem vorhergehenden Anspruch, wobei der Neigungswinkel α zwischen 30° und 60°, vorzugsweise gleich 45°, beträgt.

5. Rad nach einem der vorhergehenden Ansprüche, wobei die Hilfsmittel zum Messen, die unabhängig von dem Deformationssensor (J1-J4) sind, in der Öffnung (3) angebracht sind, wobei die Mittel in dem Öffnung (3) ausgerichtet sind, um die Erfassung einer vertikalen Deformation des Rades (1) im Betrieb zu fördern.

6. Rad nach einem der vorhergehenden Ansprüche, wobei der Deformationssensor (J1-J4) in einem radial äußeren Abschnitt der Öffnung (3) angebracht ist.

7. Rad nach einem der vorhergehenden Ansprüche, wobei zumindest vier Öffnungen (3) in der Scheibe (11) des Rades (1) in einem gleichen radialen Abstand von dem Radzentrum ausgebildet sind, wobei mindestens ein Deformationssensor (J1-J4) in jeder der Öffnungen (3) angebracht ist, wobei die Dehnungssensoren (J1-J4) miteinander verbunden sind, um eine Wheatstone'sche Brücke zu bilden, um die Deformationen des Rades (1) im Betrieb zu messen.

8. Rad nach dem vorhergehenden Anspruch, wobei die vier Öffnungen (3) ein erstes Paar von Öffnungen (P1) und ein zweites Paar von Öffnungen (P5) definieren, wobei die Öffnungen (3) eines selben Paares (P1; P5) in der Nähe voneinander ausgebildet sind, wobei das erste Paar von Öffnungen (P1) und das zweite Paar von Öffnungen (P5) auf dem Rad (1) diametral entgegengesetzt sind.

9. Vorrichtung zur Messung der Kontaktkräfte eines Rades eines Schienenfahrzeugs auf einer Schiene, wobei die Vorrichtung ein Rad nach einem der Ansprüche 1 bis 8 und einen Rechner umfasst, der mit dem Rad (1) verbunden ist, und konfiguriert ist, um die longitudinale Kontaktkraft als Funktion der Deformation zu berechnen, die von dem Deformationssensor (J1-J4) gemessen wird.

10. Vorrichtung nach dem vorhergehenden Anspruch, wobei die Vorrichtung Mittel zur Erfassung der Position der Öffnung (3) mit Bezug auf den Bereich des Kontakts von Rad / Schiene aufweist.

11. Vorrichtung nach dem vorhergehenden Anspruch, wobei der Rechner konfiguriert ist, um die longitudinale Kontaktkraft als Funktion von der Position der Öffnung (3) mit Bezug auf den Bereich des Kontakts von Rad / Schiene zu berechnen.

12. Vorrichtung nach einem der Ansprüche 9 bis 11, wobei die Vorrichtung Mittel zum Messen der Drehgeschwindigkeit des Rades (1) aufweist, die mit dem Computer verbunden sind.

13. Verfahren zur Herstellung eines Rades nach einem der Ansprüche 1 bis 8 ausgehend von einem Rad, das eine Scheibe und ein Radzentrum umfasst, wobei bei in dem Verfahren:
a. mindestens eine Öffnung (3) in der Scheibe (11) des Rades (1) bearbeitet wird, wobei die Öffnung (3) ein Öffnungszentrum umfasst;
b. mindestens ein Deformationssensor (J1-J4) in der Öffnung (3) angeordnet wird; und
c. der Deformationssensor (J1-J4) schräg in der Öffnung (3) mit Bezug auf eine radiale Gerade ausgerichtet wird, die zwischen dem Radzentrum und seinem Öffnungszentrum verläuft, um die Erfassung von einer longitudinalen Deformation des Rades (1) im Betrieb zu fördern.

14. Verfahren nach Anspruch 13, in dem:
a. zumindest ein erstes Paar (P1) von Öffnungen (3) in der Scheibe (11) des Rades (1) bearbeitet wird;
b. mindestens ein zweites Paar (P5) von Öffnungen (3) in der Scheibe (11) des Rades (1), das diametral gegenüber dem ersten Paar (P1) ist, maschinell bearbeitet wird;
c. mindestens Deformationssensor (J1-J4) in jeder Öffnung (3) platziert wird;
d. jeder Dehnungssensor (J1-J4) schräg in seiner Öffnung (3) mit Bezug auf eine radiale Gerade ausgerichtet wird, die zwischen dem Radzentrum und seinem Öffnungszentrum verläuft, um die Erfassung von einer longitudinalen Deformation des Rades (1) im Betrieb zu fördern; und
e. Deformationssensoren (J1-J4) so verbunden werden, dass sie eine Wheatstone'sche Brücke bilden.

## Claims

1. Wheel (1) for a railway vehicle, the wheel (1) comprising a wheel centre and a disc (11) wherein is formed at least one orifice (3) comprising an orifice centre, at least one deformation sensor (J1-J4) being mounted in the orifice (3) so as to measure the deformations of the wheel (1) in operation, wheel **characterised in that** the deformation sensor (J1-J4) is oriented obliquely in the said orifice (3) relative to a radial straight line passing between the wheel centre and the orifice centre so as to promote the detection of longitudinal deformation of the wheel (1) in operation.

2. Wheel according to the preceding claim, wherein the wheel (1) comprising a wheel centre, at least two orifices (3) being formed in the disc (11) of the wheel (1) at the same radial distance from the wheel centre, the orifices (3) are formed close together to form a pair of orifices (P1; P5) so as to increase their sensitivity to longitudinal deformation.

3. Wheel according to the preceding claim, wherein the deformation sensor (J1-J4) is oriented obliquely at an angle of inclination α relative to a straight line Δ running radially from the centre of the wheel (1) and passing between the two orifices (3) of the disc (11) of the wheel (1) at an equal distance from the said two orifices (3).

4. Wheel according to the preceding claim, wherein the angle of inclination α is between 30° and 60°, preferably 45°.

5. Wheel according to any one of the preceding claims, wherein auxiliary measuring means, independent of the said deformation sensor (J1-J4), are mounted in the said orifice (3), the said means being oriented in the said orifice (3) so as to promote the detection of vertical deformation of the wheel (1) in operation.

6. Wheel according to any one of the preceding claims, wherein the deformation sensor (J1-J4) is mounted in a radially external portion of the orifice (3).

7. Wheel according to any one of the preceding claims, wherein at least four orifices (3) being formed in the disc (11) of the wheel (1) at the same radial distance from the wheel centre, at least one deformation sensor (J1-J4) being mounted in each of the said orifices (3), the deformation sensors (J1-J4) are connected to one another to form a Wheatstone bridge so as to measure the deformation of the wheel (1) in operation.

8. Wheel according to the preceding claim, wherein the four orifices (3) defining a first pair (P1) of orifices and a second pair (P5) of orifices, the orifices (3) of one single pair (P1; P5) being formed close together, the first pair (P1) of orifices and the second pair (P5) of orifices are diametrically opposed on the wheel (1).

9. Device for measuring forces of contact of a railway vehicle wheel against a rail, the device comprising a wheel according to any one of claims 1 to 8 and a computer connected to the said wheel (1) and configured for calculating the longitudinal force of contact with respect to the deformation measured by the said deformation sensor (J1-J4).

10. Device, according to the preceding claim, wherein the device comprises means of detecting the position of the said orifice (3) relative to the wheel/rail contact zone.

11. Device, according to the preceding claim, wherein the computer is configured for calculating the longitudinal force of contact with respect to the position of the said orifice (3) relative to the wheel/rail contact zone.

12. Device, according to any one of claims 9 to 11, wherein the device comprises means of measuring the rotational speed of the wheel (1), which means of measuring are connected to the said computer.

13. Method of manufacturing a wheel according to any one of claims 1 to 8 from a wheel comprising a disc and a wheel centre, method wherein:
a. at least one orifice (3) is machined in the disc (11) of the wheel (1), the orifice (3) comprising an orifice centre;
b. at least one deformation sensor (J1-J4) is placed in the said orifice (3) and
c. the deformation sensor (J1-J4) is oriented obliquely in the said orifice (3) relative to a radial straight line passing between the wheel centre and the orifice centre so as to promote the detection of longitudinal deformation of the wheel (1) in operation.

14. Method, according to claim 13, wherein:
a. at least a first pair (P1) of orifices (3) is machined in the disc (11) of the wheel (1);
b. at least a second pair (P5) of orifices (3) is machined in the disc (11) of the wheel (1) diametrically opposed to the first pair (P1);
c. at least deformation sensor (J1-J4) is placed in each orifice (3);
d. each deformation sensor (J1-J4) is oriented obliquely in its orifice (3) relative to a radial straight line passing between the wheel centre and the centre of its orifice so as to promote the detection of longitudinal deformation of the wheel (1) in operation and
e. the deformation sensors (J1-J4) are connected so as to form a Wheatstone bridge.
